(19) Europäisches Patentamt
European Patent Office
Office européen des brevets

(11) **EP 3 955 165 A1**

(12) **EUROPEAN PATENT APPLICATION**

(43) Date of publication:
**16.02.2022 Bulletin 2022/07**

(21) Application number: **21157634.3**

(22) Date of filing: **17.02.2021**

(51) International Patent Classification (IPC):
**G06N 3/04** *(2006.01)*    **G06F 7/544** *(2006.01)*

(52) Cooperative Patent Classification (CPC):
**G06N 3/0454; G06F 7/5443;** G06F 2207/4824;
G06N 3/063

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.08.2020 KR 20200102600**

(71) Applicant: **Samsung Electronics Co., Ltd.**
**Suwon-si 16677 (KR)**

(72) Inventors:
• **Son, Jinwoo**
**16678 Gyeonggi-do (KR)**
• **Son, Changyong**
**16678 Gyeonggi-do (KR)**
• **Park, Seungin**
**16678 Gyeonggi-do (KR)**
• **Yoo, Jaeyoung**
**16678 Gyeonggi-do (KR)**
• **Yoo, Byungin**
**16678 Gyeonggi-do (KR)**

(74) Representative: **Arnold & Siedsma**
**Bezuidenhoutseweg 57**
**2594 AC The Hague (NL)**

(54) **METHOD AND APPARATUS WITH CONVOLUTION OPERATION PROCESSING BASED ON REDUNDANCY REDUCTION**

(57)    A processor-implemented neural network layer convolution operation method includes: obtaining a first input plane of an input feature map and a first weight plane of a weight kernel; generating base planes, corresponding to an intermediate operation result of the first input plane, based on at least a portion of available weight values of the weight kernel; generating first accumulation data based on at least one plane corresponding to weight element values of the first weight plane among the first input plane and the base planes; and generating a first output plane of an output feature map based on the first accumulation data.

FIG.7

**Description**

BACKGROUND

1. Field

The following description relates to a method and apparatus with convolution operation processing based on redundancy reduction.

2. Description of Related Art

Technical automation of a recognition process may be implemented using, for example, a neural network model implemented by a processor as a special calculation structure, which may provide a computationally intuitive mapping between an input pattern and an output pattern after considerable training. An ability to be trained to generate such mapping may be referred to as a "training ability of a neural network." Moreover, due to specialized training, such a specialized and trained neural network may have a generalization ability to generate a relatively accurate output for an input pattern that is not trained.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a processor-implemented neural network layer convolution operation method includes: obtaining a first input plane of an input feature map and a first weight plane of a weight kernel; generating base planes, corresponding to an intermediate operation result of the first input plane, based on at least a portion of available weight values of the weight kernel; generating first accumulation data based on at least one plane corresponding to weight element values of the first weight plane among the first input plane and the base planes; and generating a first output plane of an output feature map based on the first accumulation data.

The generating of the first accumulation data may include: determining a first target plane corresponding to a weight value of a first weight element of the first weight plane among the first input plane and the base planes; determining a first target region in the first target plane based on an offset of the first weight element; and generating the first accumulation data by performing an accumulation operation based on target elements of the first target region.

The determining of the first target region may include determining the first target region using a first pointer pointing to the first target region among pointers pointing to different regions of the first target plane based on the offset of the first weight element.

Each of the base planes may correspond to a respective available weight value among the portion of available weight values, and the determining of the first target plane may include determining, as the first target plane, a base plane corresponding to an available weight value equal to an absolute value of the weight value of the first weight element.

The generating of the first accumulation data further may include: determining a second target plane corresponding to a weight value of a second weight element of the first weight plane among the first input plane and the base planes; and determining a second target region in the second target plane based on an offset of the second weight element, and the performing of the accumulation operation may include accumulating target elements of the first target region and corresponding target elements of the second target region.

The first target region may correspond to one-dimensional (1D) vector data of a single-instruction multiple-data (SIMD) operation.

The offset of the first weight element may correspond to a position of the first weight element in the first weight plane.

A number of the available weight values may be determined based on a bit precision of the weight kernel.

A bit precision of the weight kernel may be less than or equal to 3 bits.

The intermediate operation result of the first input plane may correspond to a multiplication result of the first input plane, and the generating of the base planes may include generating the base planes corresponding to the multiplication result through a shift operation and an addition operation instead of performing a multiplication operation.

The first input plane and the first weight plane may correspond to a first input channel among a plurality of input channels, and the first output plane may correspond to a first output channel among a plurality of output channels.

The method may include: generating second accumulation data based on a second input plane of the input feature map and a second weight plane of the weight kernel, wherein the generating of the first output plane may include generating the first output plane by accumulating the first accumulation data and the second accumulation data.

A non-transitory computer-readable storage medium may store instructions that, when executed by a processor, configure the processor to perform the method.

In another general aspect, a neural network layer convolution operation apparatus includes: a processor configured to: obtain a first input plane of an input feature map and a first weight plane of a weight kernel; generate base planes, corresponding to an intermediate operation result of the first input plane, based on at least a portion of available weight values of the weight kernel; generate first accumulation data based on at least one plane corresponding to weight element values of the first weight plane among the first input plane and the base planes; and generate a first output plane of an output feature map based on the first accumulation data.

For the generating of the first accumulation data, the processor may be configured to determine a first target plane corresponding to a weight value of a first weight element of the first weight plane among the first input plane and the base planes, determine a first target region in the first target plane based on an offset of the first weight element, and generate the first accumulation data by performing an accumulation operation based on target elements of the first target region.

The processor may be configured to determine the first target region by determining a first pointer pointing to the first target region among pointers pointing to different regions of the first target plane based on the offset of the first weight element.

A bit precision of the weight kernel may be less than or equal to 3 bits.

The intermediate operation result of the first input plane may correspond to a multiplication result for the first input plane, and the processor may be configured to generate the base planes corresponding to the multiplication result through a shift operation and an addition operation instead of performing a multiplication operation.

The apparatus may include a memory storing instructions that, when executed by the processor, configure the processor to perform the obtaining of the first input plane, the generating of the base planes, the generating of the first accumulation data, and the generating of the first output plane.

An electronic apparatus may include: the apparatus above and a camera configured to generate an input image based on detected visual information, wherein the apparatus above is a processor, and the input feature map may correspond to the input image.

In another general aspect, an electronic apparatus includes: a camera configured to generate an input image based on detected visual information; and a processor configured to obtain a first input plane of an input feature map corresponding to the input image and a first weight plane of a weight kernel, generate base planes, corresponding to an intermediate operation result of the first input plane, based on at least a portion of available weight values of the weight kernel, generate first accumulation data based on at least one plane corresponding to weight element values of the first weight plane among the first input plane and the base planes, and generate a first output plane of an output feature map based on the first accumulation data.

For the generating of the first accumulation data, the processor may be configured to determine a first target plane corresponding to a weight value of a first weight element of the first weight plane among the first input plane and the base planes, determine a first target region in the first target plane based on an offset of the first weight element, and generate the first accumulation data by performing an accumulation operation based on target elements of the first target region.

The processor may be configured to determine the first target region by determining a first pointer pointing to the first target region among pointers pointing to different regions of the first target plane based on the offset of the first weight element.

The intermediate operation result of the first input plane may correspond to a multiplication result for the first input plane, and the processor may be configured to generate the base planes corresponding to the multiplication result through a shift operation and an addition operation instead of performing a multiplication operation.

The processor may be configured to generate any one or any combination of a classification result, a detection result, a tracking result, an identification result, a recognition result, and an authentication result of the input image, based on the output feature map.

In another general aspect, a processor-implemented neural network layer convolution operation method includes: obtaining an input plane of an input feature map and a weight plane of a weight kernel; generating base planes as corresponding to multiplication results between the input plane and available weight values of the weight kernel; determining target regions among the base planes and the input plane that correspond to weight elements of the weight plane, based on weight values of the weight elements and positions of the weight elements in the weight plane; and generating a portion of an output plane of an output feature map by accumulating the target regions. This aspect may be but need not be combinable with previously discussed aspects.

The generating of the base planes may include generating a base plane for each absolute value of the available weight values greater than one.

Other features and aspects will be apparent from the following detailed description, the drawings, and the claims.

BRIEF DESCRIPTION OF THE DRAWINGS

FIG. 1 illustrates an example of an operation of a processing apparatus for processing a convolution operation associated with a layer of a neural network.
FIG. 2 illustrates an example of a process of a convolution operation between weight kernels and an input feature map.
FIGS. 3A and 3B illustrate examples of a process of a convolution operation between a weight plane and an input plane.
FIG. 4 illustrates an example of a process of generating base planes based on an input plane and available weight values.

FIG. 5 illustrates an example of a target point pointed to by pointers for each plane.

FIG. 6 illustrates an example of a pointer function corresponding to an operation result of a convolution operation.

FIG. 7 illustrates an example of target regions pointed to by a pointer function.

FIGS. 8A and 8B illustrate examples of a process of processing a convolution operation based on vector data.

FIG. 9 illustrates an example of a process of generating a single output feature map using a method of processing a convolution operation.

FIG. 10 illustrates an example of a process of generating a single output plane using a method of processing a convolution operation.

FIG. 11 illustrates an example of a configuration of a processing apparatus for processing a convolution operation associated with a layer of a neural network.

FIG. 12 illustrates an example of an electronic apparatus associated with a processing apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Hereinafter, some example embodiments will be described in detail with reference to the accompanying drawings. Various modifications may be made to the example embodiments. Here, the example embodiments are not construed as limited to the disclosure and should be understood to include all changes, equivalents, and replacements within the idea and the technical scope of the disclosure.

The terminology used herein is for the purpose of describing example embodiments only and is not intended to be limiting of the present disclosure. As used herein, the singular forms (for example, "a", "an", and "the") are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, integers, steps, operations, elements, components, numbers, and/or a combination thereof, but do not preclude the presence or addition of one or more other features, integers, steps, operations, elements, components, numbers, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

Unless otherwise defined herein, all terms used herein including technical or scientific terms have the same meanings as those generally understood by one of ordinary skill in the art to which this disclosure pertains consistent with and after an understanding of the present disclosure. Terms, such as those defined in commonly used dictionaries, should be construed to have meanings matching contextual meanings in the relevant art and the present disclosure, and are not to be construed as an ideal or excessively formal meaning unless otherwise defined herein.

When describing the example embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

Also, the terms "first," "second," "A," "B," "(a)," "(b)," and the like may be used herein to describe components according to example embodiments. Each of these terminologies is not used to define an essence, order or sequence of a corresponding component but used merely to distinguish the corresponding component from other component(s). Although terms of "first" or "second" are used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. Likewise, expressions, for example, "between" and "immediately between" and "adjacent to" and "immediately adjacent to" may also be construed as described in the foregoing.

A component having a common function with a component included in one example embodiment is described using a like name in another example embodiment. Unless otherwise described, description made in one example embodiment may be applicable to another example embodiment and detailed description within a redundant range is omitted.

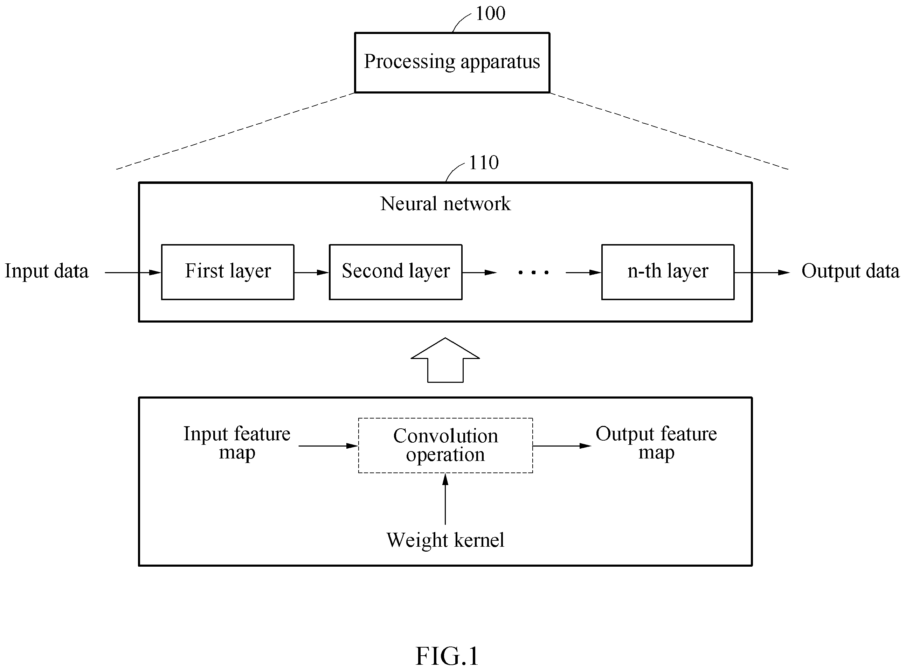

FIG. 1 illustrates an example of an operation of a processing apparatus (for example, a processing apparatus 100) for processing a convolution operation associated with a layer of a neural network (for example, a neural network 110). Referring to FIG. 1, the processing apparatus 100 may process an operation associated with the neural network 110. In response to the operation associated with the neural network 110 being processed, the neural network 110 may perform an operation for training of the neural network 110. For example, the operation of the neural network 110 may include object classification, object detection, object tracking, object identification, object recognition, or user authentication. At least a portion of processing operations associated with the neural network 110 may be embodied by hardware including a neural processor, or a combination hardware and software. The operation processing apparatus 100 may be or be provided in, for example, a mobile phone, a desktop, a laptop, a tablet personal computer (PC), a wearable device, a smart television (TV), a smart vehicle, a security system, a smart home system, a smart home appliance, and the like.

The neural network 110 may correspond to a deep neural network (DNN) including a plurality of layers. The plurality of layers may include an input layer, at least one hidden layer, and an output layer. A first layer, a second layer and an n-th layer of FIG. 1 may be at least a portion of the plurality of layers. For example, the input layer may be the first layer, the at least one hidden layer may include the second layer through n-1 layers, and the output layer may be the n-th layer. The neural network 110 may include any one or any combination of a fully connected network (FCN), a convolutional neural network (CNN), and a recurrent neural network (RNN). For example, at least a portion of the plurality of layers in the neural network 110 may correspond to a CNN, and another portion may correspond to an FCN. In this example, the CNN may be referred to as a convolutional layer, and the FCN may be referred to as a fully connected layer.

In the CNN, data input to each layer may be referred to as an "input feature map" and data output from each layer may be referred to as an "output feature map". The input feature map and the output feature map may also be referred to as activation data. An output feature map of a layer may be, or may be used to generate, an input feature map of a subsequent layer. When a convolutional layer corresponds to an input layer, an input feature map of the input layer may correspond to input data. For example, the input data may be an input image or data resulting from an initial processing of the input image.

The neural network 110 may be trained based on deep learning, and may perform inference suitable for the purpose of training, by mapping input data and output data that are in a nonlinear relationship. The deep learning may be a machine learning scheme for solving an issue such as image or voice recognition from a big data set. The deep learning may be understood as a process of solving an optimization issue to find a point at which energy is minimized while training the neural network 110 based on prepared training data.

Through supervised or unsupervised learning of the deep learning, a structure of the neural network 110 or a weight corresponding to a model may be obtained or determined, and input data and output data may be mapped to each other through the weight. For example, when a width and a depth of the neural network 110 are sufficiently large, the neural network 110 may have a capacity large enough to implement an arbitrary function. When the neural network 110 is trained on a sufficiently large quantity of training data through an appropriate training process, an optimal performance may be achieved.

In the following description, the neural network 110 may be expressed as being "pre-trained", where "pre-" may indicate a state before the neural network 110 is "started". The "started" neural network 110 may indicate that the neural network 110 may be ready for inference. For example, "start" of the neural network 110 may include loading of the neural network 110 in a memory, or an input of input data for inference to the neural network 110 after the neural network 110 is loaded in the memory.

The processing apparatus 100 may perform a convolution operation between an input feature map of each convolutional layer and a weight kernel to process an operation associated with each convolutional layer, and may generate an output feature map based on an operation result of the convolution operation. To process an operation associated with the neural network 110, a plurality of operations including a multiplication and accumulation (MAC) operation may be processed. Also, a large amount of computing resources and time may be consumed to process an operation. The processing apparatus 100 of one or more embodiments may lighten the neural network 110 and perform high-speed operation processing, thereby reducing the above consumption of the computing resources and the time so that the neural network 110 may also be effectively implemented in a resource-limited environment, such as a sensor environment or an embedded environment (for example, a mobile terminal).

For a high speed and low power operation of the neural network 110, a low-bit precision may be applied to an activation and a weight. A relatively low bit precision may be assigned to the weight in comparison to the activation. A reduction in bit precisions of both the activation and the weight may negatively influence a network performance (for example, an accuracy). To effectively maintain the network performance, the bit precision of the activation may be maintained and the bit precision of the weight may be lowered. For example, the activation may be expressed in 8 bits and the weight may be expressed in 3 bits or less (for example, 3 bits or 2 bits).

When the weight is expressed with a low-bit precision, a large number of redundant operations may occur during a convolution operation, which will be further described below. Expressing the weight with the low-bit precision may indicate that a small number of weight values may be expressed with the low-bit precision, and accordingly an operation based on the same weight value may be repeatedly performed. Due to a characteristic of a convolution operation that repeatedly performs a MAC operation, such redundancy may occupy a large portion of the convolution operation. In one or more embodiments, intermediate operation results to be used in the convolution operation may be secured in advance, and may be used to perform the convolution operation, and thus the processing apparatus 100 of one or more embodiments may reduce redundancy that may occur during the convolution operation.

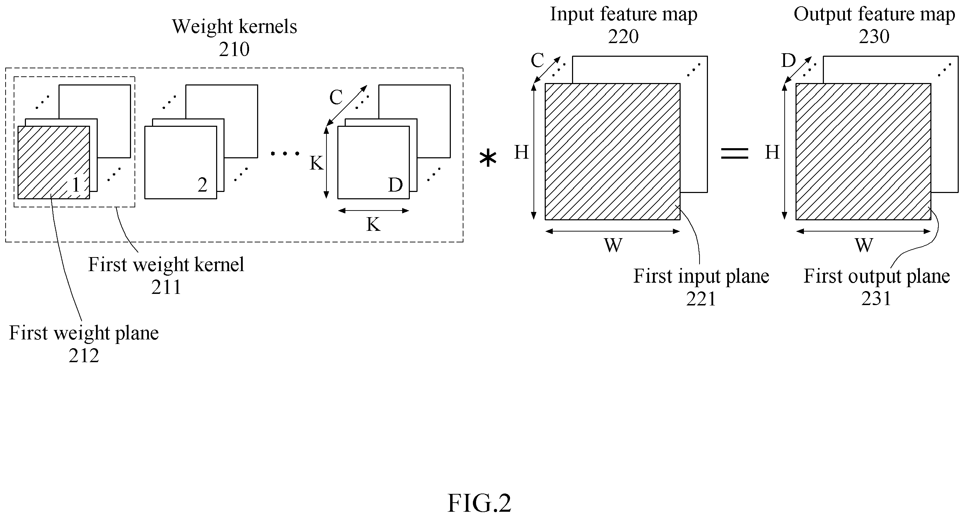

FIG. 2 illustrates an example of a process of a convolution operation between weight kernels (for example, weight kernels 210) and an input feature map (for example, an input feature map 220). Referring to FIG. 2, each of the weight kernels 210 may have a size of "K × K × C", the input feature map 220 may have a size of "W × H × C", and an output feature map 230 may have a size of "W × H × D". The weight kernels 210, the input feature map 220, and the output feature map 230 may each include elements with a predetermined bit precision. For example, an element of a weight kernel 210 may be referred to as a "weight element", an element of the input feature map 220 may be referred to as an "input element" and an element of the output feature map 230 may be referred to as an "output element". In examples, operations (for example, a convolution operation) may be performed element-wise. W, K, and H may each represent a number of elements. For convenience of description, a width and a height of a weight plane may be the same as K and an input plane and an output plane may have the same size as "W × H". However, depending on examples, the width and the height of the weight plane may be different from each other, or the input plane and the output plane may have different sizes.

The weight kernels 210, the input feature map 220, and the output feature map 230 may each include a plurality of planes. For example, each of the weight kernels 210 may include "C" weight planes, the input feature map 220 may include "C" input planes, and the output feature map 230 may include "D" output planes. In this example, the "C" weight planes and "C" input planes may respectively correspond to input channels, and the "D" output planes may respectively correspond to output channels (and the "D" output planes may correspond to the "D" number of weight kernels 210, for example). In other words, "C" may correspond to a number of input channels, and "D" may correspond to a number of output channels.

The output feature map 230 may be generated based on the convolution operation between the weight kernels 210 and the input feature map 220. Each of the weight kernels 210 may have a size of "K × K × C" and the input feature map 220 may have a size of "W × H × C", and accordingly the convolution operation between the weight kernels 210 and the input feature map 220 may correspond to a three-dimensional (3D) convolution operation. For example, a first output plane 231 may be generated as an operation result of a 3D convolution operation between a first weight kernel 211 and the input feature map 220.

Each of the weight kernels 210 may be divided into a plurality of weight planes, and the input feature map 220 may be divided into a plurality of input planes, and accordingly the 3D convolution operation may be reconstructed with a combination of a plurality of 2D convolution operations. For example, the 3D convolution operation between the first weight kernel 211 and the input feature map 220 may be reconstructed by accumulating operation results of 2D convolution operations between weight planes of the first weight kernel 211 and input planes of the input feature map 220, to generate an output plane of the output feature map 230. In this example, a 2D convolution operation between a weight plane and an input plane corresponding to the same input channel, for example, a first weight plane 212 and a first input plane 221, may be performed.

For example, a first operation result may be generated through a convolution operation between the first weight plane 212 and the first input plane 221. The above operation result may be referred to as an "accumulation plane". When an operation result is expressed in a form of a 2D plane, the operation result may be referred to as an "accumulation plane". When the operation result is expressed in a form of a one-dimensional (1D) vector, the operation result may be referred to as an "accumulation vector". Also, the accumulation plane and the accumulation vector may be collectively referred to as "accumulation data".

Other accumulation planes may be generated through convolution operations between the other input planes of the input feature map 220 and the other weight kernels of the first weight kernel 211. All "C" accumulation planes associated with the input feature map 220 and the first weight kernel 211 may be generated and accumulated, to generate the first output plane 231. Another output plane of the output feature map 230 may be generated through a convolution operation between another weight kernel among the weight kernels 210 and the input feature map 220. When convolution operations for all the weight kernels 210 are completed, the output feature map 230 may be completely generated.

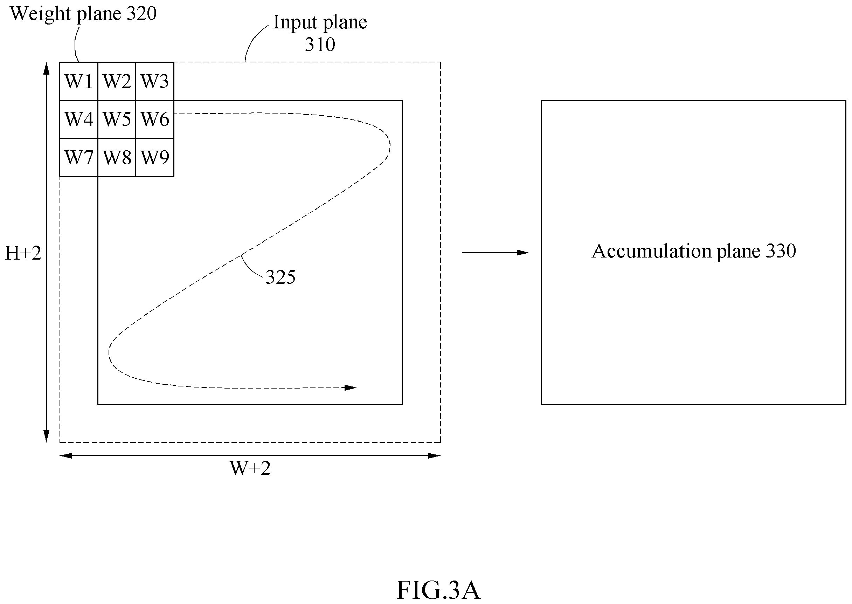

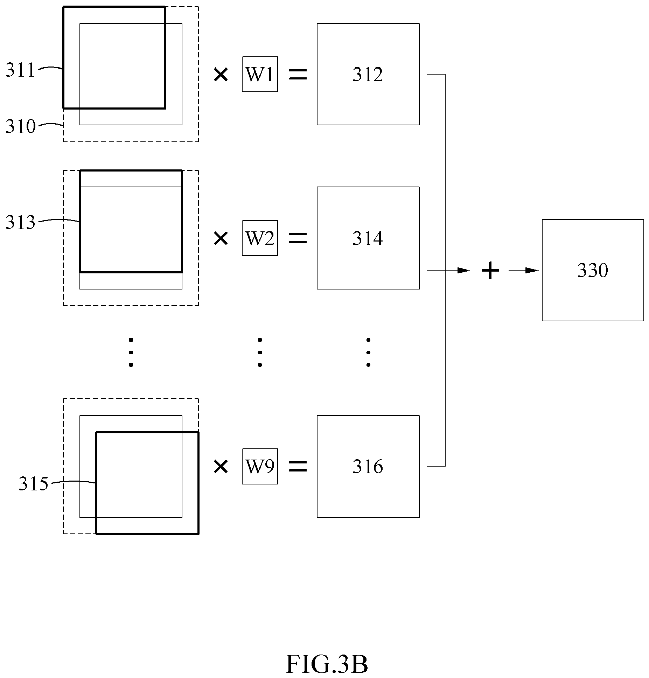

FIGS. 3A and 3B illustrate examples of a process of a convolution operation between a weight plane and an input plane. FIG. 3A illustrates a sliding window-based convolution operation, and FIG. 3B illustrates an accumulation-based convolution operation. The accumulation-based convolution operation may be a recombination of an operation process of a window-based convolution operation. Depending on examples, the accumulation-based convolution operation may be performed instead of the sliding window-based convolution operation.

Referring to FIG. 3A, through a convolution operation between an input plane 310 and a weight plane 320, an accumulation plane 330 may be generated. As described above, the accumulation plane 330 may correspond to partial data for an output plane, and an output plane may be generated by accumulating the accumulation plane 300 and other accumulation planes. The convolution operation between the input plane 310 and the weight plane 320 may be a process of summing element-wise multiplication results with respect to an overlapping region between the input plane 310 and the weight plane 320 when the weight plane 320 is sliding along a path 325 (e.g., for each position to which the weight plane 320 slides according to a sliding stride). For example, a first element of the accumulation plane 330 may be the sum of the element-wise multiplication results of a first overlapping region between the input plane 310 and the weight plane 320, and a second element of the accumulation plane 330 may be the sum of the element-wise multiplication results of a second overlapping region between the input plane 310 and the weight plane 320, where the weight plane 320 slides from the first position to the second position along the path 325 by the sliding stride.

Although the path 325 is abstractly shown in FIG. 3A, sliding along the path 325 may be actually performed based on a sliding stride. For convenience of description, the sliding stride may be "1". However, depending on examples, the sliding stride may have a value other than "1" (for example, an integer greater than "1"). The weight plane 320 may slide in a unit of a single element based on the sliding stride of "1". Also, to maintain a size of an input and an output, zero padding through zero element vectors may be applied to an outer region of the input plane 310. Thus, the input plane 310 may have a size of "$(W + 2) \times (H + 2)$".

In the example of FIG. 3A, the weight plane 320 includes weight elements W1 through W9. When the weight plane 320 slides along the path 325, overlapping regions between the respective weight elements W1 through W9 and the input plane 310 may have redundancy. Accordingly, the accumulation-based convolution operation of FIG. 3B may effectively reduce the above redundancy.

Referring to FIG. 3B, regions 311, 313, and 315 respectively corresponding to weight elements W1, W2, and W9 may be set in the input plane 310 based on the path 325 of FIG. 3A. The regions 311, 313, and 315 may be regions of the input plane 310 in which each of the respective weight elements W1 to W9 and the input plane 310 overlap when the weight plane 320 slides along the path 325. For example, when the weight plane 320 slides along the path 325, the weight element W1 may overlap with the input plane 310 except for the two rightmost element columns and the two bottommost element rows of the input plane 310, and thus the region 311 may be the input plane 310 excluding such columns and rows. Intermediate planes 312, 314, and 316 may be generated by multiplication operations between the weight elements W1, W2, and W9 and the respective regions 311, 313, and 315. Although not shown in FIG. 3B, regions corresponding to the weight elements W3 to W8 may also be similarly set, and intermediate planes for the regions may be similarly derived. When intermediate planes for all the weight elements W1 to W9 are generated, the accumulation plane 330 may be generated by accumulating the generated intermediate planes. When a result of the above multiplication operation is expressed as a 2D plane, the result may be referred to as an "intermediate plane". In another example, when the result of the above multiplication operation is expressed as a 1D vector, the result may be referred to as an "intermediate vector". The intermediate plane and the intermediate vector may be collectively referred to as "intermediate data."

When weight elements have the same weight value, a large quantity of redundant data may be generated between intermediate planes for the weight elements. For example, when the weight elements W1 and W2 have the same weight value as "2", the intermediate planes 312 and 314 may be generated by multiplying input elements of the respective regions 311 and 313 in the same input plane 310 by the weight value of "2". The regions 311 and 313 may overlap in a relatively wide area (for example, may overlap a substantially similar area of the input plane 310), and a multiplication by the same weight value may be performed, and accordingly a large quantity of redundant data may be generated between the intermediate planes 312 and 314. Weight values of weight elements may be briefly referred to as "weight element values".

The weight elements W1 to W9 may be expressed with a predetermined bit precision. For example, the bit precision of the weight elements W1 to W9 may be indicated by S. In this example, the weight elements W1 to W9 may have "2^S" available weight values. When S decreases, a number of available weight values that may be expressed with S may decrease, and accordingly a probability that weight elements have the same value may increase. In this example, the processing apparatus 100 of one or more embodiments may reduce a redundancy of operations by recombining a convolution operation process. Depending on examples, multiplication results for the input plane 310 may be secured in advance as intermediate operation results, and a convolution operation may be performed based on the multiplication results, and thus the processing apparatus 100 of one or more embodiments may reduce redundancy that may occur during the convolution operation.

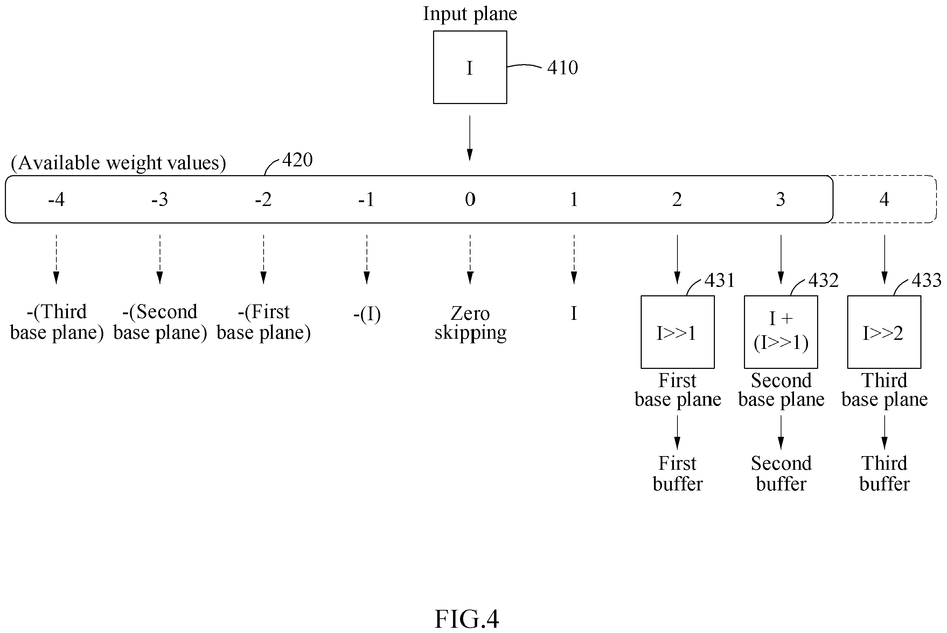

FIG. 4 illustrates an example of a process of generating base planes based on an input plane and available weight values. Referring to FIG. 4, available weight values 420 include values of "-4" to "3", for example. In FIG. 4, a bit precision of a weight is 3 bits. However, FIG. 4 merely illustrates an example, and the bit precision is not limited to 3 bits. The bit precision may have various values other than "3". For example, the bit precision of the weight may be set as a low-bit precision, for example, 2 bits or 4 bits. In FIG. 4, the values of "-4" to "3" are decimal representations. For example, the values of "-4" to "3" may respectively correspond to binary representations (2's complement) "100" to "011". Hereinafter, examples will be described based on decimal representations.

Depending on examples, to perform a convolution operation, multiplication results for an input plane 410 may be secured (for example, determined) in advance as intermediate operation results of the convolution operation. For example, based on at least a portion of the available weight values 420, the multiplication results for the input plane 410 may be secured in advance. The multiplication results secured in advance may be referred to as "base planes", and a weight value used to derive a base plane may be referred to as a "base weight value".

In an example, to minimize a number of operations used to secure multiplication results and a buffer space used to store the secured multiplication results, a minimum number of multiplication results may be secured. For example, zero skipping may be performed on a weight value of "0", and the input plane 410 may be used for a weight value of "1" without a change. Thus, multiplication results for the weight values of "0" and "1" may not be separately secured. Also, in an example of weight values (for example, "-2" and "2", "-3" and "3", and/or "-4" and "4") having the same absolute value, one of two multiplication results may be secured. Sign-related processing may be performed on the secured multiplication result, and accordingly the multiplication result on which the sign-related processing is performed may be used as the other multiplication result.

Thus, a multiplication operation for "2^S" available weight values may be covered through multiplication results secured based on "2^(S-1)-1" weight values. Accordingly, a first base plane 431, a second base plane 432 and a third base plane 433 corresponding to multiplication results for the input plane 410 may be generated based on base weight values of "2", "3" and "4", as shown in FIG. 4. For example, "-4" as a minimum value among the available weight values 420 may be converted into "4" that is an absolute value of "-4" for convenience of computation, and may be used as a base weight value.

Each base plane may correspond to a multiplication result between a base weight value and the input plane 410. For example, the first base plane 431 may correspond to a multiplication result between the base weight value of "2" and the input plane 410. Also, the second base plane 432 may correspond to a multiplication result between the base weight value of "3" and the input plane 410, and the third base plane 433 may correspond to a multiplication result between the base weight value of "4" and the input plane 410. In this example, each multiplication operation may correspond to an element-wise operation.

In an example, each multiplication result corresponding to a base plane may be generated through a shift operation and an addition operation, instead of performing a multiplication operation (for example, a direct multiplication operation). Since the multiplication operation requires a larger number of computations than the shift operation and the addition operation, the processing apparatus 100 of one or more embodiments may reduce an amount of computations used to secure a base plane by replacing the multiplication with the shift operation and the addition operation. For example, when the input plane 410 is denoted by I, the first base plane 431 may be generated through I>>1 corresponding to a shift operation. Also, the second base plane 432 may be generated through I+(I>>1) corresponding to a shift operation and an addition operation, and the third base plane 433 may be generated through I>>2 corresponding to a shift operation. In this example, each shift operation and each

When base planes are secured, the base planes may be stored in the buffer space and used for a convolution operation. For example, the first base plane 431 may be stored in a first buffer, the second base plane 432 may be stored in a second buffer, and the third base plane 433 may be stored in a third buffer.

At least one plane among the input plane 410 and the first base plane 431 through the third base plane 433 may be selectively used based on an actual weight value of a weight plane. In an example, when a weight value is "2", at least a portion of a region (for example, a target region) may be extracted from the first base plane 431 stored in the first buffer, and may be used as intermediate data. In another example, when a weight value is "-3", at least a portion of a region (for example, a target region) may be extracted from the second base plane 432 stored in the second buffer, and may be used as intermediate data. In this example, a sign of the intermediate data may be inverted, or a subtraction operation instead of an addition operation may be applied in a subsequent accumulation process. As described above, intermediate data may be generated using each base plane based on each weight value of the weight plane, and accumulation data may be generated by accumulating the intermediate data.

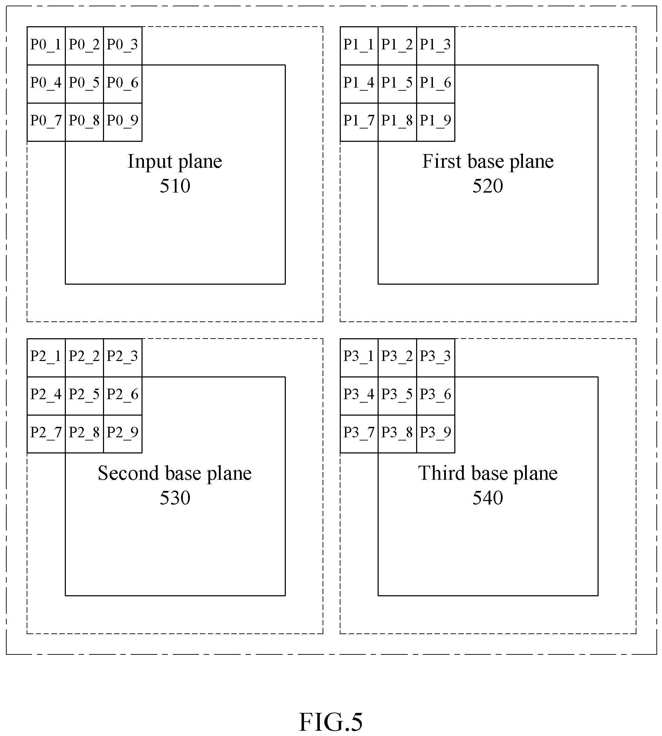

FIG. 5 illustrates an example of a target point pointed to by pointers for each plane. When a first base plane 520, a second base plane 530, and a third base plane 540 are generated and stored in a buffer, target points in the input plane 510 and the first base plane 520 through the third base plane 540 may be pointed to by pointers for the input plane 510 and the first base plane 520 through the third base plane 540. For example, a target point may include a memory address.

Referring to FIG. 5, pointers Px_y for the input plane 510 and the first base plane 520 through the third base plane 540 may be defined. In pointers Px_y, x denotes a plane identifier, and y denotes an offset identifier. For example, x for the input plane 510 may be "0", x for the first base plane 520 may be "1", x for the second base plane 530 may be "2", and x for the third base plane 540 may be "3". An offset may be determined based on a position of each weight element in a weight plane. Also, x may be an integer of "0" to X, and X may denote a number of base planes. y may be an integer of "1" to Y, and Y may denote a number of weight elements in each weight plane. For example, when a weight plane has a size of "3 × 3", "Y" may be "9".

In an example, for a multiplication operation between a weight element and the input plane 510, a target plane corresponding to a weight value of the weight element may be selected from the input plane 510 and the first base plane 520 through the third base plane 540, and a target point of the target plane may be determined based on an offset of the weight element. In the above process, a pointer may be determined to point to the target plane and the target point. For example, a point pointing to a predetermined target region may be selected from pointers pointing to different regions of a target plane based on an offset of a weight element. In an example, when a weight element has a weight value of "-2" and an offset of "5", a target region may be pointed to by a pointer P1_5. For example, a target point may correspond to a start address of a target region. When target regions for all weight elements of a weight plane are determined through the above process, accumulation data for the weight plane may be completed through an accumulation operation of target elements of the target regions.

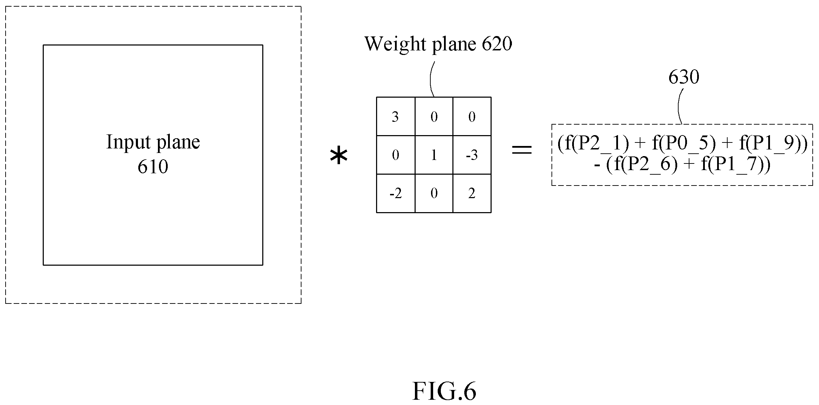

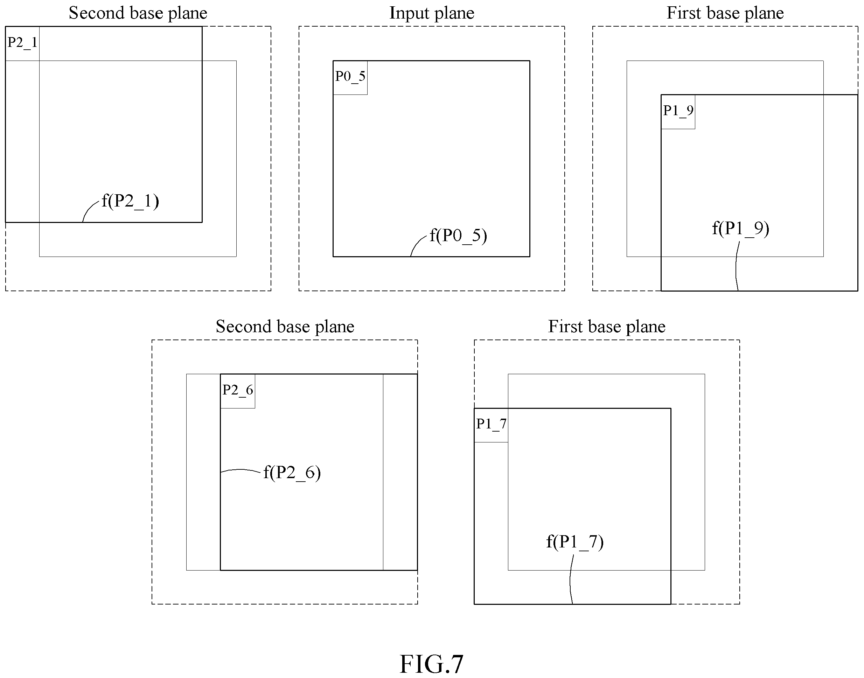

FIG. 6 illustrates an example of a pointer function corresponding to an operation result of a convolution operation, and FIG. 7 illustrates an example of target regions indicated by a pointer function (for example, the pointer function of FIG. 6). Referring to FIG. 6, through a convolution operation between an input plane 610 and a weight plane 620, an operation result 630 may be derived. The operation result 630 may correspond to accumulation data. For example, a second base plane corresponding to a weight value of "3" of a first weight element of the weight plane 620 among the input plane 610 and base planes related to the input plane 610 may be determined as a first target plane, and a first target region may be determined in the first target plane based on an offset "1" of the first weight element. The first target plane and the first target region may be pointed to by a pointer P2_1 for the first weight element.

Also, the input plane 610 corresponding to a weight value of "1" of a fifth weight element of the weight plane 620 among the input plane 610 and the base planes related to the input plane 610 may be determined as a second target plane, and a second target region may be determined in the second target plane based on an offset "5" of the fifth weight element. The second target plane and the second target region may be pointed to by a pointer P0_5 for the fifth weight element.

Similarly to the first weight element and the fifth weight element, a pointer P2_6 for a sixth weight element may be derived, a pointer P1_7 for a seventh weight element may be derived, and a pointer P1_9 for a ninth weight element may be derived. Since the other weight elements have a weight value "0", zero skipping may be performed on the other weight elements. The operation result 630 may include a pointer function f. The pointer function f may map a pointer and a target region. FIG. 7 illustrates target regions of planes corresponding to the pointers P2_1, P0_5, P1_9, P2_6, and P1_7. In FIG. 7, the target regions may correspond to 2D plane data. Unlike the example of FIG. 7, the target regions may correspond to 1D vector data. For example, for single-instruction multiple-data (SIMD) processing, a target region may be defined as 1D vector data. SIMD may be an operation processing scheme of a processor to process multiple data by a single instruction.

When target regions are derived using the pointer function, accumulation data for the weight plane 620 may be completed through an accumulation operation of target elements of the target regions. The accumulation operation may correspond to an element-wise operation. Target elements of target regions corresponding to positive weight values, for example, "3", "1" and "2", may be accumulated based on an addition operation, and target elements of target regions corresponding to negative weight values, for example, "-3" and "-2", may be accumulated based on a subtraction operation.

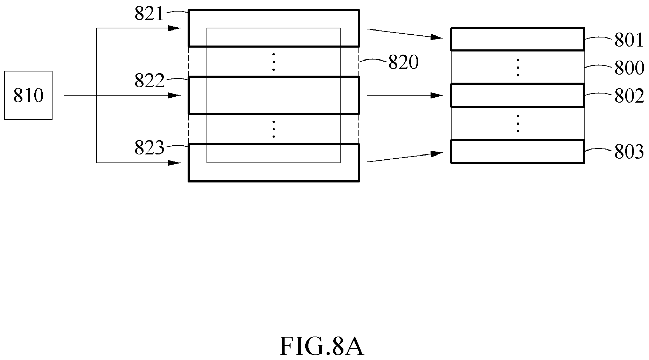

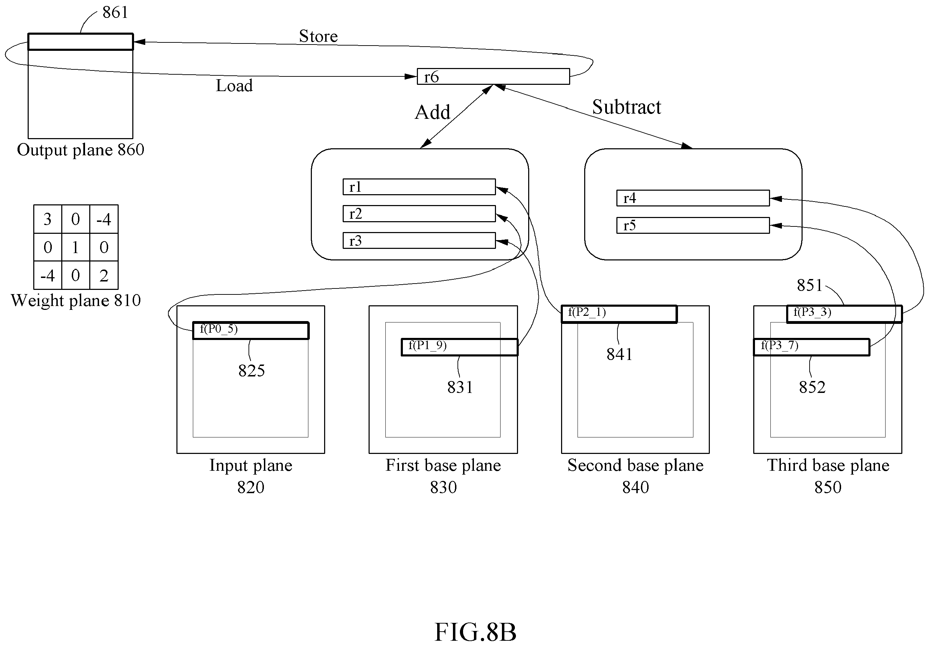

FIGS. 8A and 8B illustrate examples of a process of processing a convolution operation based on vector data. A convolution operation may be performed through 1D vector data-based SIMD processing, which will be further described below. In FIGS. 8A and 8B, a size of SIMD may correspond to a width W of an input feature map.

Referring to FIG. 8A, an accumulation-based convolution operation between a weight plane 810 and an input plane 820 may be performed based on vector data for SIMD processing. For example, an accumulation vector 801 of an accumulation plane 800 may be generated based on an accumulation-based convolution operation between a first input region 821 of the input plane 820 and the weight plane 810, and an accumulation vector 802 may be generated based on an accumulation-based convolution operation between a second input region 822 of the input plane 820 and the weight plane 810. Also, an accumulation vector 803 may be generated based on an accumulation-based convolution operation between a third input region 823 of the input plane 820 and the weight plane 810. Each height of the first input region 821 through the third input region 823 may correspond to a height of the weight plane 810.

FIG. 8B illustrates an example of a process of performing an accumulation-based convolution operation between the weight plane 810 and the input plane 820 in a state in which a first base plane 830, a second base plane 840 and a third base plane 850 are generated in advance based on the input plane 820. FIG. 8B illustrates a convolution operation between the first input region 821 and the weight plane 810 of FIG. 8A.

Referring to FIG. 8B, target regions corresponding to weight elements of the weight plane 810 may be determined in the input plane 820 and the first base plane 830 through the third base plane 850. For example, a first target region 841 of the second base plane 840 pointed to by a pointer P2_1 may be determined corresponding to a first weight element "3", and a second target region 825 of the input plane 820 pointed to by a pointer P0_5 may be determined corresponding to a fifth weight element "1". Also, a third target region 831 of the first base plane 830 pointed to by a pointer P1_9 may be determined corresponding to a ninth weight element "2". Target elements of the first target region 841, the second target region 825, and the third target region 831 may be stored in registers r1, r2 and r3, respectively.

In addition, a fourth target region 851 of the third base plane 850 pointed to by a pointer P3_3 may be determined corresponding to a third weight element "-4", and a fifth target region 852 of the third base plane 850 pointed to by a pointer P3_7 may be determined corresponding to a seventh weight element "-4". Target elements of the fourth target region 851 and the fifth target region 852 may be stored in registers r4 and r5, respectively. The target elements of each of the first target region 841, the second target region 825, the third target region 831, the fourth target region 851 and the fifth target region 852 may correspond to 1D vector data.

An accumulation operation based on the target elements of each of the first target region 841, the second target region 825, the third target region 831, the fourth target region 851 and the fifth target region 852 may be performed. For example, the target elements stored in the registers r1 through r3 may be accumulated in a register r6 based on an addition operation. Also, the target elements stored in the registers r4 and r5 may be accumulated in the register r6 based on a subtraction operation. When accumulation operations associated with the registers r1 through r5 are completed, the accumulation vector 801 corresponding to an operation result of the accumulation-based convolution operation between the first input region 821 and the weight plane 810 of FIG. 8A may be stored in the register r6. The accumulation vector 801 in the register r6 may correspond to a first output region 861 of an output plane 860.

When the first output region 861 of the output plane 860 includes a prestored accumulation vector, the accumulation vector may be loaded into the register r6, and the target elements in the registers r1 through r5 may be accumulated in the register r6. For example, when a convolution operation for a weight plane other than the weight plane 810 is previously performed for an output channel, an accumulation vector may be previously stored in the first output region 861. In an example, when a convolution operation for the weight plane 810 of FIG. 8B is an initial convolution operation for the output channel, the first output region 861 may not include a prestored accumulation vector. In this example, the target elements in the registers r1 through r5 may be accumulated in the register r6, instead of performing the above-described loading operation. When convolution operations for all weight planes corresponding to the output channel are completed, a completed output vector may be stored in the first output region 861.

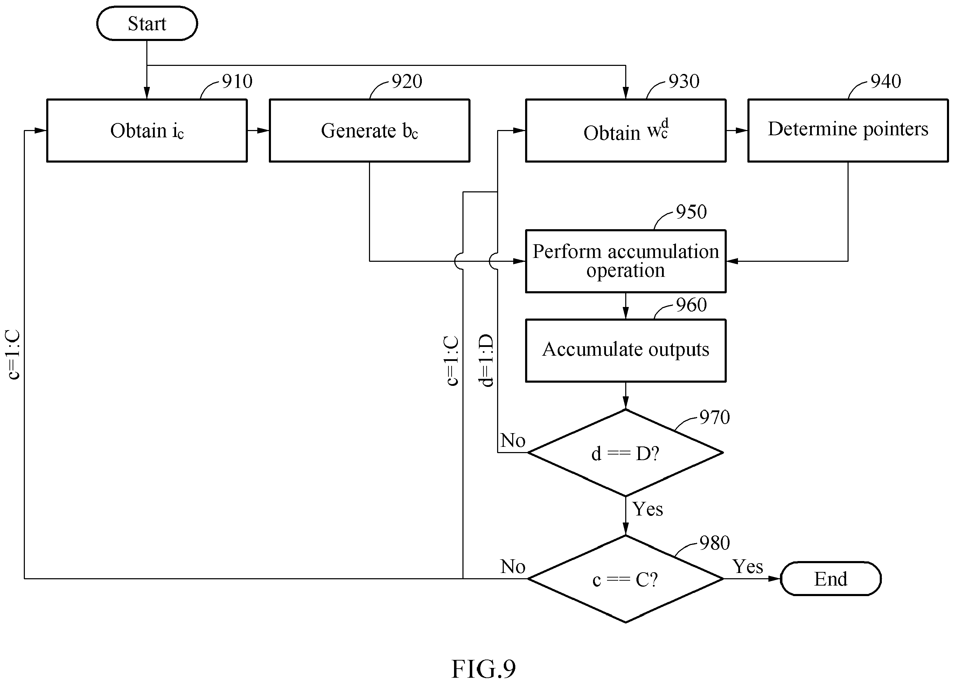

FIG. 9 illustrates an example of a process of generating a single output feature map using a method of processing a convolution operation. Referring to FIG. 9, a processing apparatus obtains a c-th input plane $i_c$ in operation 910, and generates base planes $b_c$ in operation 920. The processing apparatus may generate the base planes $b_c$ corresponding to a multiplication result for the c-th input plane $i_c$ based on at least a portion (for example, a base weight) of available weight values of a weight kernel. The processing apparatus may store at least one of the c-th input plane $i_c$ and the base planes $b_c$ in a buffer.

The processing apparatus obtains a weight plane $W_c^d$ in operation 930 and determines pointers in operation 940. For example, the processing apparatus may determine a first target plane corresponding to a weight value of a first weight element of the weight plane $W_c^d$ among the c-th input plane $i_c$ and the base planes $b_c$, and may determine a first target region in the first target plane based on an offset of the first weight element. The processing apparatus may determine a pointer based on an identifier of the first target plane and an identifier (for example, an offset identifier) of the first target region. Thus, the processing apparatus may determine a pointer of each of weight elements of the weight plane $w_c^d$. For example, zero skipping may be applied to a weight element having a value of "0".

In operation 950, the processing apparatus performs an accumulation operation. For example, an element with a positive weight value may be accumulated through an addition operation, and an element with a negative weight value may be accumulated through a subtraction operation. In operation 960, the processing apparatus accumulates outputs. For example, the processing apparatus may accumulate accumulation data accumulated in operation 950 in a corresponding region of an output plane.

In operation 970, the processing apparatus compares d and D. When d and D are different, that is, when a weight kernel for which operations on the c-th input plane $i_c$ and the base planes $b_c$ have not been completed yet, remains among "D" weight kernels, d may be increased by "1" and operation 930 may be performed. When d and D are the same, that is, when operations on the c-th input plane $i_c$ and the base planes $b_c$ for all the "D" weight kernels are completed, an accumulation process of the c-th input plane $i_c$ may be terminated. In operation 980, the processing apparatus compares c and C. When c and C are different, that is, when an accumulation process for all input channels is not completed, c may be increased by "1" and operations 910 and 930 may be performed. When c and C are the same, that is, when accumulation for all the input channels is completed, an accumulation convolution operation of a corresponding layer may be terminated, which may indicate that an output feature map of the layer is completed.

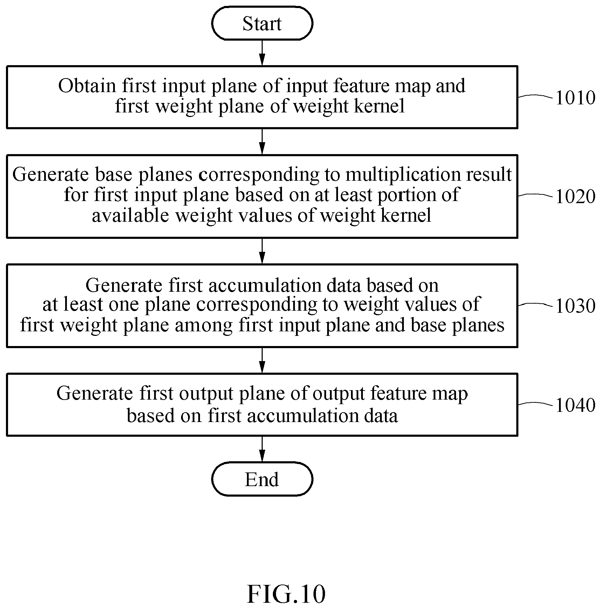

FIG. 10 illustrates an example of a process of generating a single output plane using a method of processing a convolution operation. Referring to FIG. 10, a processing apparatus obtains a first input plane of an input feature map and a first weight plane of a weight kernel in operation 1010, generates base planes corresponding to a multiplication result for the first input plane based on at least a portion of available weight values of the weight kernel in operation 1020, generates first accumulation data based on at least one plane corresponding to weight element values of the first weight plane among the first input plane and the base planes in operation 1030, and generates a first output plane of an output feature map based on the first accumulation data in operation 1040. The description of FIGS. 1 through 9, 11 and 12 may be applicable to the method of processing a convolution operation, and further description is not repeated herein.

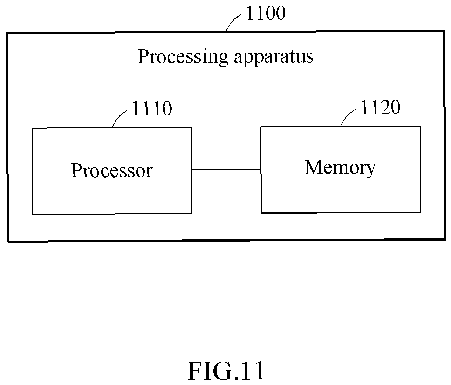

FIG. 11 illustrates an example of a configuration of a processing apparatus (for example, a processing apparatus 1100) for processing a convolution operation associated with a layer of a neural network. Referring to FIG. 11, the processing apparatus 1100 includes a processor 1110 for example, one or more processors) and a memory 1120 (for example, one or more memories). The memory 1120 may be connected to the processor 1110, and may store instructions executable by the processor 1110, data to be computed by the processor 1110, or data processed by the processor 1110. The memory 1120 may include, for example, a non-transitory computer-readable storage medium, for example, a high-speed random access memory (RAM) and/or a non-volatile computer-readable storage medium (for example, at least one disk storage device, a flash memory device, or other non-volatile solid state memory devices). In an example, the processing apparatus 1100 may be, or include, the processing apparatus 100 of FIG. 1.

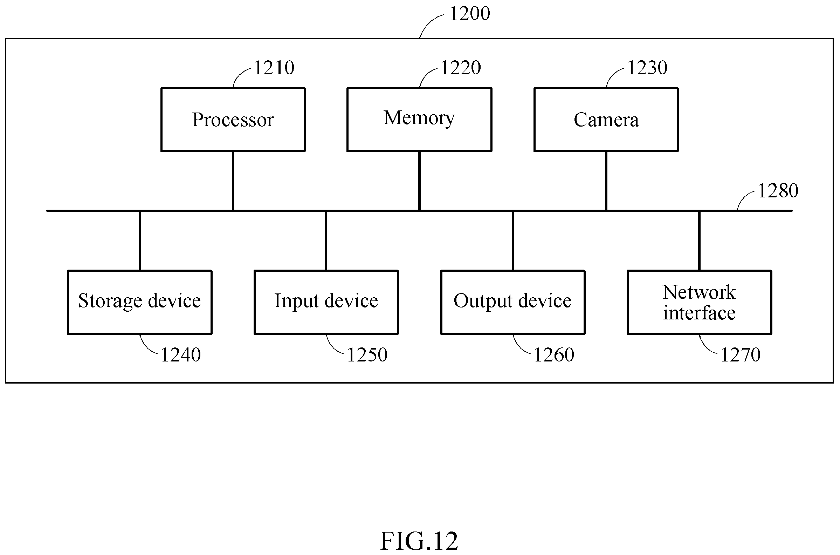

The processor 1110 may execute instructions to perform at least one or all of the operations described above with reference to FIGS. 1 through 10 above and FIG. 12 below. For example, the processor 1110 may obtain a first input plane of an input feature map and a first weight plane of a weight kernel, may generate base planes corresponding to a multiplication result for the first input plane based on at least a portion of available weight values of the weight kernel, may generate first accumulation data based on at least one plane corresponding to weight element values of the first weight plane among the first input plane and the base planes, and may generate a first output plane of an output feature map based on the first accumulation data in operation. In addition, the description of FIGS. 1 through 10 and 12 is also applicable to the processing apparatus 1100, and further description is not repeated herein.

FIG. 12 illustrates an example of an electronic apparatus (for example, an electronic apparatus 1200) associated with a processing apparatus. FIG. 12 illustrates a configuration of the electronic apparatus 1200. The electronic apparatus 1200 may be, or include, the processing apparatus 100 of FIG. 1 and/or the processing apparatus 1100 of FIG. 11. For example, the electronic apparatus 1200 may obtain an input image, and may perform operations associated with the input image using a neural network. The operations associated with the input image may include, for example, object classification, object detection, object tracking, object identification, object recognition, or user authentication. For example, the electronic apparatus 1200 may determine an input feature map corresponding to the input image, may generate an output feature map corresponding to the input feature map through at least one layer of the neural network, and may generate any one or any combination of a classification result, a detection result, a tracking result, an identification result, a recognition result, and an authentication result associated with the input image, based on the output feature map.

The electronic apparatus 1200 includes a processor 1210 (e.g., one or more processors), a memory 1220 (e.g., one or more memories), a camera 1230, a storage device 1240, an input device 1250, an output device 1260, and a network interface 1270. The processor 1210, the memory 1220, the camera 1230, the storage device 1240, the input device 1250, the output device 1260, and the network interface 1270 may communicate with each other via a communication bus 1280. For example, the electronic apparatus 1200 may be implemented as at least a portion of, for example, a mobile device such as a mobile phone, a smartphone, a personal digital assistant (PDA), a netbook, a tablet computer or a laptop computer, a wearable device such as a smartwatch, a smart band or smart glasses, a computing device such as a desktop or a server, home appliances such as a television (TV), a smart TV or a refrigerator, a security device such as a door lock, or a vehicle such as a smart vehicle.

The processor 1210 may execute instructions and functions in the electronic apparatus 1200. For example, the processor 1210 may process instructions stored in the memory 1220 or the storage device 1140. The processor 1210 may perform at least one of the operations described above with reference to FIGS. 1 through 12.

The memory 1220 may store data for processing of a convolution operation. The memory 1220 may include a non-transitory computer-readable storage medium or a non-transitory computer-readable storage device. The memory 1220 may store instructions that are to be executed by the processor 1210, and also store information associated with software and/or applications when the software and/or applications are being executed by the electronic apparatus 1200.

The camera 1230 may detect visual information and may generate an input image, for example, a photo and/or a video, based on the detected visual information. For example, the camera 1230 may generate a user image including a user (for example, a face). In an example, the camera 1230 may provide a three-dimensional (3D) image including depth information associated with objects.

The storage device 1240 may include a non-transitory computer-readable storage medium or a non-transitory computer-readable storage device. In an example, the storage device 1240 may store a greater amount of information than that of the memory 1220 for a relatively long period of time. For example, the storage device 1240 may include magnetic hard disks, optical disks, flash memories, floppy disks, or other forms of non-volatile memories known in the art.

The input device 1250 may receive an input from a user through a traditional input scheme using a keyboard and a mouse, and through a new input scheme such as a touch input, a voice input and an image input. The input device 1250 may include, for example, a keyboard, a mouse, a touch screen, a microphone, or other devices configured to detect an input from a user and transmit the detected input to the electronic apparatus 1200.

The output device 1260 may provide a user with an output of the electronic apparatus 1200 through a visual channel, an auditory channel, or a tactile channel. The output device 1260 may include, for example, a display, a touchscreen, a speaker, a vibration generator, or any other device configured to provide a user with the output. The network interface 1270 may communicate with an external device via a wired or wireless network.

The processing apparatuses, processors, memories, electronic apparatuses, cameras, storage devices, input devices, output devices, network interfaces, communication buses, processing apparatus 100, processing apparatus 1100, processor 1110, memory 1120, electronic apparatus 1200, processor 1210, memory 1220, camera 1230, storage device 1240, input device 1250, output device 1260, network interface 1270, communication bus 1280, apparatuses, units, modules, devices, and other components described herein with respect to FIGS. 1-12 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, SIMD multiprocessing, multiple-instruction single-data (MISD) multiprocessing, and multiple-instruction multiple-data (MIMD) multiprocessing.

The methods illustrated in FIGS. 1-12 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions used herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. A processor-implemented neural network layer convolution operation method, the method comprising:

   obtaining a first input plane of an input feature map and a first weight plane of a weight kernel;
   generating base planes, corresponding to an intermediate operation result of the first input plane, based on at least a portion of available weight values of the weight kernel;
generating first accumulation data based on at least one plane corresponding to weight element values of the first weight plane among the first input plane and the base planes; and
generating a first output plane of an output feature map based on the first accumulation data.

2. The method of claim 1, wherein generating of the first accumulation data comprises:

determining a first target plane corresponding to a weight value of a first weight element of the first weight plane among the first input plane and the base planes;
determining a first target region in the first target plane based on an offset of the first weight element; and
generating the first accumulation data by performing an accumulation operation based on target elements of the first target region.

3. The method of claim 2, wherein determining of the first target region comprises determining the first target region using a first pointer pointing to the first target region among pointers pointing to different regions of the first target plane based on the offset of the first weight element.

4. The method of claim 2 or 3, wherein each of the base planes corresponds to a respective available weight value among the portion of available weight values, and the determining of the first target plane comprises determining, as the first target plane, a base plane corresponding to an available weight value equal to an absolute value of the weight value of the first weight element.

5. The method of claim 2, 3, or 4 wherein generating of the first accumulation data further comprises:

determining a second target plane corresponding to a weight value of a second weight element of the first weight plane among the first input plane and the base planes; and
determining a second target region in the second target plane based on an offset of the second weight element, and
the performing of the accumulation operation comprises accumulating target elements of the first target region and corresponding target elements of the second target region.

6. The method of any of the claims 2-5, wherein the first target region corresponds to one-dimensional (1D) vector data of a single-instruction multiple-data (SIMD) operation; and/or
wherein the offset of the first weight element corresponds to a position of the first weight element in the first weight plane.

7. The method of any of the previous claims, wherein a number of the available weight values is determined based on a bit precision of the weight kernel; and/or
wherein a bit precision of the weight kernel is less than or equal to 3 bits.

8. The method of any of the previous claims, wherein the intermediate operation result of the first input plane corresponds to a multiplication result of the first input plane, and
wherein generating of the base planes comprises generating the base planes corresponding to the multiplication result through a shift operation and an addition operation instead of performing a multiplication operation.

9. The method of any of the previous claims, wherein the first input plane and the first weight plane correspond to a first input channel among a plurality of input channels, and the first output plane corresponds to a first output channel among a plurality of output channels.

10. The method of any of the previous claims, further comprising:

generating second accumulation data based on a second input plane of the input feature map and a second weight plane of the weight kernel, wherein the generating of the first output plane comprises generating the first output plane by accumulating the first accumulation data and the second accumulation data.

11. The method of claim 1, further comprising generating base planes as corresponding to multiplication results between the first input plane and the available weight values of the weight kernel;
determining target regions among the base planes and the first input plane that correspond to weight elements of the weight plane, based on weight values of the weight elements and positions of the weight elements in the weight plane; and
generating a portion of an output plane of an output feature map by accumulating the target regions;
wherein the generating of the base planes preferably comprises generating a base plane for each absolute value of the available weight values greater than one.

12. A computer program comprising instructions that, when executed by a processor, configure the processor to perform the method of any of the previous claims.

**13.** A non-transitory computer-readable storage medium having stored thereon the computer program of claim 12.

**14.** A neural network layer convolution operation apparatus, the apparatus comprising:
a processor configured to perform the method of any of claims 1-12.

**15.** The electronic apparatus of claim 14, further comprising a camera configured to generate input image based on detected visual information, and wherein the input feature map corresponds to the input image.

FIG.1

FIG.2

FIG.3A

EP 3 955 165 A1

311 —

310 —

× W1 = 312

313 —

× W2 = 314

315 —

× W9 = 316

+ → 330

FIG.3B

Input plane

I — 410

(Available weight values) — 420

| -4 | -3 | -2 | -1 | 0 | 1 | 2 | 3 | 4 |
|---|---|---|---|---|---|---|---|---|

-(Third base plane)  -(Second base plane)  -(First base plane)  -(I)  Zero skipping  I

431

I>>1

First base plane

First buffer

432

I + (I>>1)

Second base plane

Second buffer

433

I>>2

Third base plane

Third buffer

FIG.4

EP 3 955 165 A1

| P0_1 | P0_2 | P0_3 |
|------|------|------|
| P0_4 | P0_5 | P0_6 |
| P0_7 | P0_8 | P0_9 |

Input plane
510

| P1_1 | P1_2 | P1_3 |
|------|------|------|
| P1_4 | P1_5 | P1_6 |
| P1_7 | P1_8 | P1_9 |

First base plane
520

| P2_1 | P2_2 | P2_3 |
|------|------|------|
| P2_4 | P2_5 | P2_6 |
| P2_7 | P2_8 | P2_9 |

Second base plane
530

| P3_1 | P3_2 | P3_3 |
|------|------|------|
| P3_4 | P3_5 | P3_6 |
| P3_7 | P3_8 | P3_9 |

Third base plane
540

FIG.5

Weight plane 620

| 3 | 0 | 0 |
|---|---|---|
| 0 | 1 | -3 |
| -2 | 0 | 2 |

Input plane 610

*

630

=

(f(P2_1) + f(P0_5) + f(P1_9)) - (f(P2_6) + f(P1_7))

FIG.6

EP 3 955 165 A1

Second base plane

P2_1

f(P2_1)

Input plane

P0_5

f(P0_5)

First base plane

P1_9

f(P1_9)

Second base plane

P2_6

f(P2_6)

First base plane

P1_7

f(P1_7)

FIG.7

FIG.8A

FIG.8B

EP 3 955 165 A1

Start

Obtain $i_c$ — 910

Generate $b_c$ — 920

Obtain $w_c^d$ — 930

Determine pointers — 940

Perform accumulation operation — 950

Accumulate outputs — 960

d == D? — 970

No

Yes

c == C? — 980

No

Yes

End

c=1:C

c=1:C

d=1:D

FIG.9

Start

Obtain first input plane of input feature map and
first weight plane of weight kernel — 1010

Generate base planes corresponding to multiplication result
for first input plane based on at least portion of
available weight values of weight kernel — 1020

Generate first accumulation data based on
at least one plane corresponding to weight values of
first weight plane among first input plane and base planes — 1030

Generate first output plane of output feature map
based on first accumulation data — 1040

End

FIG.10

FIG.11

FIG.12

Europäisches
Patentamt

European
Patent Office

Office européen
des brevets

# EUROPEAN SEARCH REPORT

Application Number

EP 21 15 7634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/065896 A1 (LEE SEHWAN [KR] ET AL) 28 February 2019 (2019-02-28) <br> * figures 9-14 * <br> * paragraph [0002] * <br> * paragraph [0005] - paragraph [0007] * <br> * paragraph [0010] - paragraph [0011] * <br> * paragraph [0023] * <br> * paragraph [0049] - paragraph [0050] * <br> * paragraph [0054] * <br> * paragraph [0058] - paragraph [0062] * <br> * paragraph [0068] - paragraph [0070] * <br> * paragraph [0074] * <br> * paragraph [0083] * <br> * paragraph [0088] * <br> * paragraph [0091] * <br> * paragraph [0108] * <br> * paragraph [0141] - paragraph [0142] * <br> * paragraph [0145] - paragraph [0148] * <br> * paragraph [0151] * <br> ----- | 1-15 | INV. <br> G06N3/04 <br> G06F7/544 |

TECHNICAL FIELDS
SEARCHED (IPC)

G06N
G06F

The present search report has been drawn up for all claims

| Place of search | Date of completion of the search | Examiner |
|---|---|---|
| The Hague | 19 July 2021 | De Meyer, Arnaud |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 15 7634

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2021

| Patent document cited in search report | Publication date | Patent family member(s) | Publication date |
|---|---|---|---|
| US 2019065896 A1 | 28-02-2019 | US 2019065896 A1<br>US 2020285887 A1 | 28-02-2019<br>10-09-2020 |

EPO FORM P0459

For more details about this annex : see Official Journal of the European Patent Office, No. 12/82